# EUROPEAN PATENT APPLICATION

(11) **EP 4 609 940 A1**
(43) Date of publication of application: **03.09.2025**
(21) Application number: 24160778.7
(22) Date of filing: 01.03.2024
(51) Int. Cl.: B01D 53/22, B01D 71/52

(54) **GAS SEPARATION MEMBRANE, GAS SEPARATION DEVICE, AND METHOD FOR PRODUCING GAS SEPARATION MEMBRANE**

(71) Applicant: Sumitomo Chemical Company, Limited, Tokyo 103-6020 (JP)
(72) Inventor: KAWARA, Kensuke, Osaka-shi, Osaka, 554-8558 (JP); IITSUKA, Kohei, Osaka-shi, Osaka, 554-8558 (JP); YOKOFUJITA, Toshiyuki, Osaka-shi, Osaka, 554-8558 (JP); KATAKURA, Shiro, Osaka-shi, Osaka, 554-8558 (JP); ADACHI, Tatsuhiko, Osaka-shi, Osaka, 554-8558 (JP)
(74) Representative: Winter, Brandl - Partnerschaft mbB

(57) **Abstract**

Provided is a gas separation membrane which is excellent in durability with respect to deterioration of a polymer due to an oxidizing gas. A gas separation membrane according to the present disclosure includes: a separate functional layer that contains an antioxidant and a polymer which has a polyethylene oxide structure, the polymer which has the polyethylene oxide structure including an ethyleneoxy unit at a proportion of 57% or more in terms of weight ratio with respect to 100% of constitutional units of a main chain, and the antioxidant having an I/O value of 0.4 or less in an organic conceptual diagram.

## Description

### Technical Field

The present invention relates to a gas separation membrane, a gas separation device, and a method for producing the gas separation membrane.

### Background Art

As a gas separation membrane that separates a specific gas component from a mixed gas, it is known to use a polymer separation membrane. For example, Patent Literature 1 discloses a method for producing a polymer gel composite membrane that is characterized by carrying out irradiation with radial rays in a state in which a liquid containing a hydrophilic polymer, an oligomer thereof, or a monomer thereof is in contact with a hydrophobic porous membrane surface, and a hydrophilic polymer gel membrane is formed on the porous membrane surface. In Patent Literature 1, it is indicated that the polymer gel composite membrane thus obtained can be used as a carbon dioxide separation membrane or the like.

### Citation List

### [Patent Literatures]

### [Patent Literature 1]

Japanese Patent Application Publication Tokukaihei No. 7-275672

### Summary of Invention

### Technical Problem

However, there is room for improvement in the above described conventional technique in terms of inhibiting deterioration of a polymer in a gas separation membrane due to an oxidizing gas.

An object of an aspect of the present invention is to provide a gas separation membrane which is excellent in durability with respect to deterioration of a polymer due to an oxidizing gas.

### Solution to Problem

In order to attain the object, a gas separation membrane in accordance with an aspect of the present invention includes: a separate functional layer that contains an antioxidant and a polymer which has a polyethylene oxide structure, the polymer which has the polyethylene oxide structure including an ethyleneoxy unit at a proportion of 57% or more in terms of weight ratio with respect to 100% of constitutional units of a main chain, and the antioxidant having an I/O value of 0.4 or less in an organic conceptual diagram.

A method for producing a gas separation membrane in accordance with an aspect of the present invention includes the step of: forming a separate functional layer on a porous support layer, the separate functional layer containing an antioxidant and a polymer which has a polyethylene oxide structure, the polymer which has the polyethylene oxide structure including an ethyleneoxy unit at a proportion of 57% or more in terms of weight ratio with respect to 100% of constitutional units of a main chain, and the antioxidant having an I/O value of 0.4 or less in an organic conceptual diagram.

A gas separation membrane in accordance with an aspect of the present invention includes: a separate functional layer that contains at least one selected from the group consisting of vitamin E and an analogue thereof; and a porous support layer.

### Advantageous Effects of Invention

According to an aspect of the present invention, it is possible to provide a gas separation membrane which is excellent in durability with respect to deterioration of a polymer due to an oxidizing gas.

### Brief Description of Drawings

Fig. 1 is a cross-sectional view schematically illustrating a gas separation membrane in accordance with an embodiment of the present invention.
Fig. 2 is a cross-sectional view schematically illustrating a gas separation membrane in accordance with another embodiment of the present invention.
Fig. 3 is a schematic diagram illustrating a gas separation device used in Examples.

### Description of Embodiments

The following description will discuss example embodiments of the present invention in detail. Note, however, that the present invention is not limited to such example embodiments. Any numerical range expressed as "A to B" herein means "A or more (higher) and B or less (lower)" unless otherwise stated.

### [1. Gas separation membrane]

A gas separation membrane in accordance with an embodiment of the present invention includes: a separate functional layer that contains an antioxidant and a polymer which has a polyethylene oxide structure, the polymer which has the polyethylene oxide structure including an ethyleneoxy unit at a proportion of 57% or more in terms of weight ratio with respect to 100% of constitutional units of a main chain, and the antioxidant having an I/O value of 0.4 or less in an organic conceptual diagram.

As a result of study by the inventors of the present invention, it has been found that there is room for improvement in a gas separation membrane using polyethylene oxide in terms of inhibiting deterioration of a polymer due to an oxidizing gas. The inventors of the present invention have also found that, when a gas separation membrane is obtained by a method that includes the step of irradiating polyethylene oxide with electron beams or the like, the polyethylene oxide is easily oxidized due to generation of radicals.

As a result of study by the inventors of the present invention, it has been found that, if a polymer which has a polyethylene oxide structure is combined with an antioxidant whose I/O value in an organic conceptual diagram is 0.4 or less, it is possible to realize a gas separation membrane which is excellent in durability with respect to deterioration of a polymer due to an oxidizing gas.

The feature in which the I/O value of the antioxidant is 0.4 or less in the organic conceptual diagram means that an organic value of the antioxidant is higher than an inorganic value. This indicates that the antioxidant is fat-soluble, is highly lipophilic, and the like. Polyethylene oxide is known as a hydrophilic polymer as described in Patent Literature 1. Therefore, it was anticipated that the polyethylene oxide would have good compatibility with a water-soluble antioxidant. Unexpectedly, however, it has been found by the inventors of the present invention that polyethylene oxide has good compatibility with a fat-soluble antioxidant from the viewpoint of improving durability in gas separation membrane applications.

As gas separation membranes, a facilitated transport membrane and a dissolution-diffusion membrane are known. The facilitated transport membrane has excellent gas selectivity. However, the facilitated transport membrane contains a gas carrier, and therefore there is concern that the gas carrier leaks out of the membrane when the gas separation membrane is used, and thus the gas separation ability is reduced. The dissolution-diffusion membrane is a gas separation membrane that does not use a gas carrier. In the dissolution-diffusion membrane, it is possible to selectively allow a specific gas component to permeate therethrough by utilizing a difference in solubility of gas components contained in a mixed gas with respect to a membrane material and a difference in diffusion coefficient of the gas components contained in the mixed gas in the membrane material.

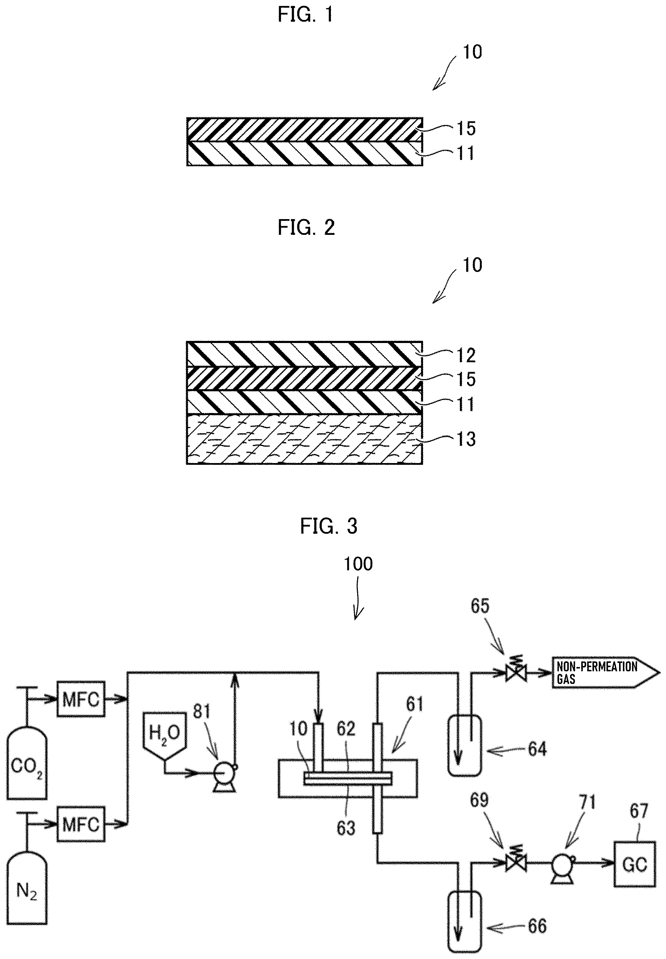

Figs. 1 and 2 are each a cross-sectional view schematically illustrating a gas separation membrane in accordance with an embodiment of the present invention. A gas separation membrane 10 includes a separate functional layer 15. The gas separation membrane 10 can be a dissolution-diffusion membrane. The gas separation membrane 10 contains a polymer which has a polyethylene oxide structure, and therefore has high affinity to carbon dioxide (CO₂). Accordingly, the gas separation membrane 10 can selectively allow CO₂ to permeate therethrough from a mixed gas (raw material gas) including CO₂ and nitrogen (N₂). The gas separation membrane 10 can be suitably used in gas separation that is carried out under a temperature condition of 20°C or more and 60°C or less. For example, the gas separation membrane 10 can be used in gas separation of a combustion exhaust gas that is generated in an incinerator.

According to the above configuration, carbon dioxide can be efficiently separated and properly reused. For example, such an effect can contribute to the achievement of Goal 13 "Take urgent action to combat climate change and its impacts" and the like of the Sustainable Development Goals (SDGs) proposed by the United Nations.

As illustrated in Figs. 1 and 2, the gas separation membrane 10 may further include a porous support layer 11, and the separate functional layer 15 may be provided on the porous support layer 11. The porous support layer 11 may be in direct contact with the separate functional layer 15. Alternatively, a gutter layer may be provided between the porous support layer 11 and the separate functional layer 15. If the gas separation membrane 10 has a gutter layer, the porous support layer 11 and the separate functional layer 15 are preferably in direct contact with the gutter layer.

As illustrated in Fig. 2, the gas separation membrane 10 may have a protective layer 12 on the opposite side of the separate functional layer 15 from the porous support layer 11. As illustrated in Fig. 2, the gas separation membrane 10 may further have a reinforcing layer 13 on the opposite side of the porous support layer 11 from the separate functional layer 15. The reinforcing layer 13 may be provided in direct contact with the porous support layer 11. For example, the reinforcing layer 13 and the porous support layer 11 may be thermally fused to each other. Alternatively, the reinforcing layer 13 and the porous support layer 11 may be bonded together by an adhesive or bonding agent.

### <1-1. Separate functional layer>

The separate functional layer 15 contains an antioxidant and a polymer which has a polyethylene oxide structure. A thickness of the separate functional layer 15 is preferably 0.01 pm or more and 100 pm or less, is more preferably 0.05 pm or more and 50 pm or less, may be 0.1 pm or more and 20 pm or less, may be 0.1 pm or more and 10 pm or less, and may be 0.2 pm or more and 2 pm or less.

### (Polymer which has polyethylene oxide structure)

Hereinafter, the polymer which has a polyethylene oxide structure is referred to also as a polymer (p). The polymer (p) includes an ethyleneoxy unit at a proportion of 57% or more, preferably 60% or more, more preferably 70% or more, further preferably 80% or more, in terms of weight ratio with respect to 100% of constitutional units of a main chain. Therefore, the polymer (p) has high affinity to CO₂. All the constitutional units of the main chain of the polymer (p) may be an ethyleneoxy unit. An amount of an ethyleneoxy unit included in the constitutional units of the main chain of the polymer (p) can be 100% or less.

In this specification, the ethyleneoxy unit means a constitutional unit expressed as -(C₂H₄O)-. The polyethylene oxide structure means a repeating structure that is of an ethyleneoxy unit and is expressed as -(C₂H₄O)ₙ-. The polymer (p) can also be said to include, in its main chain, the repeating structure that is of an ethyleneoxy unit and is expressed as - (C₂H₄O)ₙ-. Here, n represents an integer of 2 or more. n is usually 100 or more and 1 million or less, may be 400 or more and 0.2 million or less, and may be 10,000 or more and 0.1 million or less. Examples of the polymer (p) include polyethylene oxide (PEO), crosslinked polyethylene oxide (crosslinked PEO) which is a crosslinked product of polyethylene oxide, a copolymer which has an ethyleneoxy unit and a constitutional unit other than an ethyleneoxy unit, and the like.

The PEO can also be said to be a homopolymer of ethylene oxide. The crosslinked PEO may be a polymer having a structure in which PEO is crosslinked in a molecule, or may be a polymer having a structure in which PEO is crosslinked between molecules. The crosslinked PEO may be a chemically-crosslinked product which has a structure crosslinked by a covalent bond, or may be a physically-crosslinked product which has a structure crosslinked by a coordinate bond and/or a hydrogen bond. Such crosslinked PEO can be formed, for example, by carrying out electron beam irradiation with respect to PEO as described later or by carrying out a crosslinking treatment using a crosslinking agent with respect to PEO. The crosslinking structure of the crosslinked PEO may be a structure in which PEO is crosslinked by a crosslinking agent in a molecule or between molecules. The crosslinking structure preferably is a structure in which a carbon atom contained in PEO is linked by a single bond in a molecule or between molecules. The crosslinked PEO has many amorphous parts, and is considered to be superior to highly crystalline PEO in terms of CO₂ permeability.

Examples of the copolymer include a polyether block amide copolymer, an ethylene oxide-propylene oxide copolymer, a polyether ester block copolymer, polyether amine, polyether-modified silicone, and the like.

A contained amount of the polymer (p) with respect to a total amount of the separate functional layer 15 is preferably not less than 50% by weight, more preferably not less than 80% by weight, further preferably not less than 90% by weight, and may be not less than 95% by weight. The contained amount of the polymer (p) with respect to the total amount of the separate functional layer 15 can be less than 100% by weight.

A weight-average molecular weight of the polymer (p) is preferably 10×10³ or more, more preferably 18×10³ or more and 10,000×10³ or less, further preferably 20×10³ or more and 8,000×10³ or less, may be 100×10³ or more and 5,000×10³ or less, and may be 300×10³ or more and 4,500×10³ or less.

The separate functional layer 15 may contain another polymer in addition to the polymer (p). Examples of such a polymer include polyacrylic acid, polypropylene oxide, polyvinyl alcohol, polyethyleneimine, polyvinylamine, polyallylamine, polyvinylpyrrolidone, and the like.

### (Antioxidant)

The separate functional layer 15 contains an antioxidant whose I/O value in the organic conceptual diagram is 0.4 or less. In the organic conceptual diagram, properties of an organic compound are divided into (i) organicity (covalent binding property) based mainly on the carbon number and (ii) inorganicity (ion binding property) based on the nature and tendency of a substituent, and the organic compound is positioned on rectangular coordinates named an organic axis and an inorganic axis in an attempt to understand an overview of the nature of the organic compound (Atsushi Fujita, "Organic Analysis", Kaniya Shoten, 1930). The carbons and substituents of the organic compound are given organic and inorganic numerical values, and a sum of numerical values of organicity obtained from the structure of the organic compound is referred to as an organic value, and a sum of numerical values of inorganicity obtained from the structure of the organic compound is referred to as an inorganic value. A value obtained by dividing an inorganic value by an organic value is referred to as an I/O value. The organic value and the inorganic value herein means values calculated based on "Organic Conceptual Diagram - Fundamentals and Applications - New edition", (Yoshio Koda, et al., SANKYO SHUPPAN CO., LTD., 2008).

The I/O value of the antioxidant is preferably 0.35 or less, more preferably 0.3 or less. The I/O value of the antioxidant is preferably 0.1 or more, more preferably 0.2 or more. The I/O value preferably falls within the above range from the viewpoint of a balance between inorganicity and organicity.

The antioxidant preferably has an organic value of 300 to 1,500 and an inorganic value of 0 to 300 in the organic conceptual diagram. The organic value of the antioxidant is more preferably 400 to 1,200, further preferably 500 to 900. The inorganic value of the antioxidant is more preferably 50 to 250 and further preferably 100 to 200.

The antioxidant is preferably in the form of liquid under conditions of 1 atm and 25°C. Such an antioxidant is excellent in compatibility with a polymer which has a polyethylene oxide structure. In addition, such an antioxidant is easy to mix when preparing a coating solution.

The antioxidant may be a primary antioxidant (radical scavenger), a secondary antioxidant (peroxide decomposition agent), or may be a combination of these. That is, the separate functional layer 15 may contain a primary antioxidant and a secondary antioxidant as the antioxidant.

Specific examples of the antioxidant include vitamin E (tocopherol, organic value: 550, inorganic value: 145, I/O value: 0.26), Irganox 1520 (manufactured by BASF Japan Ltd., organic value: 580, inorganic value: 155, I/O value: 0.27), 2,6-di-t-butyl-4-s-butylphenol (organic value: 320, inorganic value: 115, I/O value: 0.36), Irganox 1076 (manufactured by BASF Japan Ltd., organic value: 660, inorganic value: 175, I/O value: 0.27), 4,6-bis(octylthiomethyl)-o-cresol (organic value: 580, inorganic value: 140, I/O value: 0.24), tris(2,4-dit-butylphenyl)phosphite (organic value: 740, inorganic value: 175, I/O value: 0.24), ADKSTAB HP-10 (manufactured by ADEKA Corporation, organic value: 680, inorganic value: 160, I/O value: 0.24), Irgafos 38 (manufactured by BASF Japan Ltd., organic value: 580, inorganic value: 160, I/O value: 0.28), triisodecyl phosphite (organic value: 620, inorganic value: 130, I/O value: 0.21), tris(2-ethylhexyl)phosphite (organic value: 500, inorganic value: 130, I/O value: 0.26), tri-o-tolyl phosphite (organic value: 440, inorganic value: 175, I/O value: 0.40), tris(2,4-di-tert-butylphenyl)phosphite (organic value: 740, inorganic value: 175, I/O value: 0.24), 2-methyl-4,6-bis[(n-octylthio)methyl]phenol (organic value: 580, inorganic value: 155, I/O value: 0.27), stearyl 3-(3,5-di-tert-butyl-4-hydroxyphenyl)propionate (organic value: 660, inorganic value: 175, I/O value: 0.27), hexadecyl 3,5-di-tert-butyl-4-hydroxybenzoate (organic value: 620, inorganic value: 175, I/O value: 0.28), 2,4-bis[(dodecylthio)methyl]-6-methylphenol (organic value: 700, inorganic value: 155, I/O value: 0.22), and the like. As the antioxidant, one type of these may be used alone, or two or more types of these may be used in combination.

An amount of the antioxidant contained in the separate functional layer 15 is preferably not less than 100 ppm by weight, more preferably not less than 1,000 ppm by weight. From the viewpoint of performance of the membrane, an upper limit of the amount of the antioxidant contained in the separate functional layer 15 is preferably not more than 30% by weight, more preferably not more than 10% by weight, and may be not more than 5% by weight.

An embodiment of the present invention encompasses a gas separation membrane which includes: a separate functional layer that contains at least one selected from the group consisting of vitamin E and an analogue thereof; and a porous support layer. In this specification, the analogue of vitamin E means a compound which has a structure similar to vitamin E, and which has a substituent or the like to the extent that the effect of an embodiment of the present invention is not impaired. Examples of the analogue of vitamin E include DL-α-tocopherol acetate, D-α-tocopherol succinate, (±)-α-tocopherol nicotinate, DL-α-tocopherol methoxypolyethylene glycol succinate, and the like.

### (Other components)

The separate functional layer 15 may contain, in addition to the polymer (p) and the antioxidant, a surfactant, a filler, a crosslinking agent, and a liquid medium (described later) which are contained in a composition to form the separate functional layer 15. When using the gas separation membrane in accordance with the present embodiment as a dissolution-diffusion membrane, the separate functional layer 15 preferably does not contain a gas carrier. Examples of the gas carrier include substances that react reversibly with carbon dioxide. Specific examples of such substances include alkali metal carbonate, alkali metal bicarbonate, alkanolamine, alkali metal hydroxide, and the like. The state of not containing a gas carrier means that a contained amount of a gas carrier is less than 0.1% by weight with respect to a total weight of the separate functional layer 15.

### <1-2. Porous support layer>

The porous support layer 11 can support the separate functional layer 15. The porous support layer 11 preferably has porosity with high gas permeability so as not to serve as resistance against diffusion of a mixed gas fed to the separate functional layer 15 and a gas (e.g., CO₂) that is contained in the mixed gas and selectively permeates through the separate functional layer 15. The porous support layer 11 can be formed by a resin material or an inorganic material. The porous support layer 11 may have a single-layer structure or may have a multilayer structure.

Examples of a resin material constituting the porous support layer 11 include polyolefin-based resins such as polyethylene (PE) and polypropylene (PP); fluorine-containing resins such as polytetrafluoroethylene (PTFE), polyvinyl fluoride (PVF), and polyvinylidene fluoride (PVDF); polyester resins such as polyethylene terephthalate (PET) and polyethylene naphthalate; polystyrene (PS), polyether sulfone (PES), polyphenylene sulfide (PPS), polysulfone (PSF), polyacrylonitrile (PAN), polyphenylene oxide (PPO), polyamide (PA), polyimide (PI), polyetherimide (PEI), polyether ether ketone (PEEK), high molecular weight polyester, heat resistant polyamide, aramid, polycarbonate, a mixture of at least two of these resin materials, and the like. Among these, the porous support layer 11 preferably contains a polyolefin-based resin, and more preferably contains at least one selected from the group consisting of polyethylene and polypropylene. Examples of an inorganic material constituting the porous support layer 11 include metals, glass, ceramics, and the like.

The porous support layer 11 is not particularly limited as long as the porous support layer 11 is a porous body. The porous support layer 11 may be a porous body in the form of sheet such as a porous resin film, a nonwoven fabric, a woven fabric, foam, a mesh, and a net. The porous support layer 11 is preferably a porous resin film.

### <1-3. Gutter layer>

The gas separation membrane 10 can have a gutter layer between the porous support layer 11 and the separate functional layer 15. The gutter layer makes it possible, when coating the porous support layer 11 with a composition for forming a separate functional layer 15, to inhibit excessive permeation of the composition into the porous support layer 11, and thus allows the separate functional layer 15 to be properly formed on the porous support layer 11. The gutter layer can also inhibit leakage of a mixed gas (raw material gas) from a defect that has occurred in the separate functional layer 15.

A gas permeation rate of the gutter layer is preferably greater than a gas permeation rate of the separate functional layer 15. The material for forming the gutter layer is not particularly limited. The gutter layer can be formed using a resin which has gas permeability. Examples of such a resin include a silicone resin, an amorphous fluorocarbon resin, and the like. The gutter layer may have a single-layer structure or may have a multilayer structure.

### <1-4. Protective layer>

In order to protect the separate functional layer 15, the gas separation membrane 10 can have a protective layer 12 on the opposite side of the separate functional layer 15 from the porous support layer 11. The protective layer 12 can be formed by a resin material or an inorganic material, and can be formed by, for example, a material described as a material that can be used in the porous support layer 11. The protective layer 12 may have a single-layer structure or may have a multilayer structure.

### <1-5. Reinforcing layer>

The gas separation membrane 10 can have a reinforcing layer 13 on the opposite side of the porous support layer 11 from the separate functional layer 15. The reinforcing layer 13 can be provided in order to improve handleability during production of the gas separation membrane 10 and to impart moderate strength to the gas separation membrane 10. The reinforcing layer 13 can have a thickness that is greater than that of the porous support layer 11. The reinforcing layer 13 can have porosity with high gas permeability so as not to serve as resistance against diffusion of a mixed gas fed to the separate functional layer 15 and a gas (e.g., CO₂) that is contained in the mixed gas and selectively permeates through the separate functional layer 15. The reinforcing layer 13 can be formed by a resin material or an inorganic material, and it is possible to use a material in the form of a nonwoven fabric, woven fabric, or net. The reinforcing layer 13 can be formed by, for example, a material described as a material that can be used in the porous support layer 11.

### [2. Method for producing gas separation membrane]

A method for producing a gas separation membrane 10 in accordance with an embodiment of the present invention includes the step of: forming a separate functional layer 15 on a porous support layer 11, the separate functional layer 15 containing an antioxidant and a polymer which has a polyethylene oxide structure, the polymer which has the polyethylene oxide structure including an ethyleneoxy unit at a proportion of 57% or more in terms of weight ratio with respect to 100% of constitutional units of a main chain, and the antioxidant having an I/O value of 0.4 or less in an organic conceptual diagram. The matters which have already been described in [1. Gas separation membrane] above will not be described below.

The step of forming the separate functional layer 15 on the porous support layer 11 may include the step of coating the porous support layer 11 with a composition containing a polymer (p), an antioxidant, and a liquid medium for dissolving or dispersing these. The production method may also include the step of filtering the composition prior to the step of coating the porous support layer 11 with the composition. By filtering the composition, it is possible to remove gas bubbles, insoluble substances, and the like contained in the composition. With this feature, when the composition is applied onto the porous support layer 11, it is possible to inhibit occurrence of a defect in a layer of the composition and a separate functional layer formed from the layer.

The liquid medium is not particularly limited, provided that the liquid medium is a medium in the form of liquid in which the polymer (p) and the antioxidant can be dissolved or dispersed. Examples of the liquid medium include: protonic polar solvents such as water and alcohols such as methanol, ethanol, 1-propanol and 2-propanol; nonpolar solvents such as toluene, xylene, and hexane; ketones such as acetone, methyl ethyl ketone and methyl isobutyl ketone; non-protonic polar solvents such as N-methylpyrrolidone, N,N-dimethylacetamide, N,N-dimethylformamide, and acetonitrile; and the like. As the liquid medium, one type of these may be used alone, or two or more types of these may be used in combination within a compatible range. Among these, a liquid medium containing at least one selected from the group consisting of water and alcohols such as methanol, ethanol, 1-propanol, and 2-propanol is preferable, and a liquid medium containing water is more preferable.

The composition may contain a surfactant, a filler, a crosslinking agent, and the like, in addition to the polymer (p), the antioxidant, and the liquid medium. The surfactant is not particularly limited, and may be an anionic surfactant, a cationic surfactant, an amphoteric surfactant, or a nonionic surfactant. Examples of the surfactant include known surfactants such as fluorine-based surfactants and silicone-based surfactants. As the surfactant, one type of these may be used alone, or two or more types of these may be used in combination. If the composition contains a surfactant, when the composition is applied onto a porous support layer, wettability between the composition and a surface to which the composition is applied can be improved so as to inhibit occurrence of unevenness in thickness of the separate functional layer 15.

The filler may be an inorganic filler such as zeolite, silica, or carbon, may be an organic filler such as resin particles, may be an organic-inorganic filler such as a metal organic framework (MOF), or may be two or more of these.

Examples of the crosslinking agent include acrylic ester and the like. The composition may not contain a crosslinking agent for crosslinking PEO. The state of not containing a crosslinking agent means that a contained amount of the crosslinking agent is less than 0.1% by weight with respect to the total weight of PEO in the composition. If the composition contains the crosslinking agent, a contained amount of the crosslinking agent may be not less than 0.1% by weight and not more than 50% by weight, may be not less than 1% by weight and not more than 20% by weight, and may be not less than 1% by weight and not more than 10% by weight, with respect to a total weight of PEO in the composition.

An amount of the polymer (p) contained in the composition may be not less than 0.1% by weight and not more than 70% by weight, may be not less than 1.0% by weight and not more than 60% by weight, and may be not less than 1.5% by weight and not more than 55% by weight.

If the gas separation membrane 10 has a gutter layer, the production method may have the step of forming a gutter layer on the porous support layer 11. The gutter layer can be formed, for example, by coating the porous support layer 11 with a material for forming a gutter layer. If a gutter layer is formed on the porous support layer 11, the composition is applied onto the side of the porous support layer 11 where the gutter layer has been formed.

A coating method for applying the composition onto the porous support layer 11 is not particularly limited. Examples of the coating method include a spin coating method, a bar coating method, a die coating method, a blade coating method, an air knife coating method, a gravure coating method, a roller coating method, a spray coating method, a dipping method, a comma roller method, a kiss coating method, screen printing, inkjet printing, and the like. An application amount of the composition is preferably in a range of 1 g/m² or more and 1,000 g/m² or less, more preferably in a range of 5 g/m² or more and 750 g/m² or less, further preferably in a range of 10 g/m² or more and 500 g/m² or less, in terms of weight per unit area (solid content per unit area). Adjustment of the weight per unit area can be controlled with a formation rate of the coating film (e.g., a transferring speed of a porous support layer), a concentration of the composition, a discharge rate of the composition, and the like.

If the gas separation membrane 10 has the reinforcing layer 13, it is preferably to prepare a laminated support including the reinforcing layer 13 and the porous support layer 11, and to apply the composition to the porous support layer 11 side of this laminated support.

The production method may include the step of removing the liquid medium from the composition. For example, the liquid medium can be removed by air drying, draft drying, heat drying, and the like. If the gas separation membrane 10 has the protective layer 12, the protective layer 12 may be formed before the step of removing the liquid medium from the composition, or the protective layer 12 may be formed after the step of removing the liquid medium from the composition.

Alternatively, the step of forming the separate functional layer 15 on the porous support layer 11 may include: the step of applying, to the porous support layer 11, a first composition containing a polymer (p) and a liquid medium for dissolving or dispersing the polymer (p); and the step of applying, to a layer of the first composition, a second composition containing an antioxidant and a liquid medium for dissolving or dispersing the antioxidant. It is possible to provide a step of irradiating the first composition with an electron beam between the step of applying the first composition to the porous support layer 11 and the step of applying the second composition to the layer of the first composition. Thus the polymer (p) can be crosslinked by the electron beam. For example, if the first composition contains PEO, crosslinked PEO can be obtained by electron beam crosslinking. By carrying out irradiation with an electron beam before applying the second composition, it is possible to prevent influence of the electron beam on the antioxidant.

An exposure dose of the electron beam is preferably 10 kGy or more, more preferably 15 kGy or more and 400 kGy or less, further preferably 20 kGy or more and 400 kGy or less, may be 30 kGy or more and 350 kGy or less, and may be 40 kGy or more and 300 kGy or less.

An electron beam may be emitted from the porous support layer 11 side to the first composition applied on the porous support layer 11. Alternatively, an electron beam may be emitted from the first composition side. Alternatively, electron beams may be emitted from both sides. An electron beam may be emitted under an air atmosphere, or an electron beam may be emitted under an atmosphere of an inert gas such as a nitrogen gas, an argon gas, or a helium gas.

### [3. Gas separation device]

The gas separation device can include the gas separation membrane 10 described above. The gas separation device is advantageous in long-term operation because the gas separation device includes the gas separation membrane 10. For example, the gas separation device in accordance with the present embodiment can be suitably used to carry out gas separation of a combustion exhaust gas that is generated in an incinerator.

The gas separation membrane 10 can be incorporated into a gas separation device as a gas separation membrane element in a known form such as a spiral type, a flat membrane type, a pleated type, or a plate-and-frame type. The gas separation membrane element may have a laminated body in which a feed side gas flow path member through which a raw material gas (mixed gas) and a non-permeation gas flow and a permeation side gas flow path member through which a permeation gas flows are formed on the gas separation membrane 10. The gas separation membrane element can have a sealing part for preventing mixing of a raw material gas and a non-permeation gas with a permeation gas.

The gas separation device can, in addition to the gas separation membrane 10 (the gas separation membrane element having the gas separation membrane 10), include a feeding section for feeding a mixed gas to the gas separation membrane 10, a permeation gas discharging section for discharging a permeation gas that has permeated through the gas separation membrane 10, and a non-permeation gas discharging section for discharging a non-permeation gas that has not permeated through the gas separation membrane 10.

An operation temperature of the gas separation device may be 20°C or more and 60°C or less, preferably 30°C or more and 55°C or less, and more preferably 35°C or more and 50°C or less.

The present invention is not limited to the embodiments, but can be altered by a skilled person in the art within the scope of the claims. The present invention also encompasses, in its technical scope, any embodiment derived by combining technical means disclosed in differing embodiments.

An embodiment of the present invention may include the following features.
<1> A gas separation membrane including: a separate functional layer that contains an antioxidant and a polymer which has a polyethylene oxide structure, the polymer which has the polyethylene oxide structure including an ethyleneoxy unit at a proportion of 57% or more in terms of weight ratio with respect to 100% of constitutional units of a main chain, and the antioxidant having an I/O value of 0.4 or less in an organic conceptual diagram.
<2> The gas separation membrane described in < 1>, in which: the antioxidant has an organic value of 300 to 1,500 and an inorganic value of 0 to 300 in the organic conceptual diagram.
<3> The gas separation membrane described in <1> or <2>, in which: the antioxidant is in the form of liquid under conditions of 1 atm and 25°C.
<4> The gas separation membrane described in any one of <1> through <3>, in which: the separate functional layer contains a primary antioxidant and a secondary antioxidant as the antioxidant.
<5> The gas separation membrane described in any one of < 1> through <4>, further including: a porous support layer, the separate functional layer being provided on the porous support layer.
<6> The gas separation membrane described in any one of < 1> through <5>, in which: the gas separation membrane is used to selectively allow carbon dioxide to permeate therethrough from a mixed gas including the carbon dioxide and nitrogen.
<7> A gas separation device, including the gas separation membrane described in any one of <1> through <6>.
<8> A method for producing a gas separation membrane, the method including the step of: forming a separate functional layer on a porous support layer, the separate functional layer containing an antioxidant and a polymer which has a polyethylene oxide structure, the polymer which has the polyethylene oxide structure including an ethyleneoxy unit at a proportion of 57% or more in terms of weight ratio with respect to 100% of constitutional units of a main chain, and the antioxidant having an I/O value of 0.4 or less in an organic conceptual diagram.
<9> A gas separation membrane, including: a separate functional layer that contains at least one selected from the group consisting of vitamin E and an analogue thereof; and a porous support layer.

### Examples

The following description will discuss working examples of the present invention.

The following description will further specifically discuss embodiments of the present invention with reference to Examples and Comparative Examples. Note, however, that the present invention is not limited to the following examples.

### [Measurement of oxidation induction time (OIT)]

Oxidation induction times used in Examples and Comparative Examples were measured using a differential scanning calorimeter (DSC) under the following conditions.

As a measurement device, DSC7020 manufactured by Hitachi High-Technologies Corporation was used. A sample was weighed by 5 mg in an aluminium pan for DSC measurement and placed into an oven, and an inner lid was closed. Then, a temperature was raised to 160°C at a temperature increase rate of 20°C/min while a nitrogen gas was flowed into the oven at 25 mL/min. After that, the sample was left to stand still for 5 minutes in that state (i.e., the state of keeping 160°C while the nitrogen gas was flowed). After the leaving to stand still, the nitrogen gas was switched to an oxygen gas, and measurement was started. A sampling interval at the time of measurement was set to 0.5 seconds. The oxidation induction time was measured by calculating a time from the switching of the nitrogen gas to the oxygen gas to a rising edge of an exothermic peak due to oxidation.

### [Quantification of antioxidant]

An amount of the antioxidant contained in the membrane was obtained by measuring a solution obtained by immersing the membrane in acetonitrile overnight using liquid chromatography (LC) under the following measurement conditions.

### <LC measurement conditions>

Device: LC-40A (manufactured by Shimadzu Corporation)
Column: L-Column3 (manufactured by Chemicals Evaluation and Research Institute, Japan)
Mobile phase A: H₂O, B: Acetonitrile
   (water used was Milli-Q water, acetonitrile used was of HPLC grade)
Gradient: B40% (15)-10-B100% (25) post run 15 min
Flow rate: 1 mL/min
Measurement time: 40 minutes
Column oven: 40°C
Detection: UV detector (detection wavelength: 254 nm) Introduced amount: 20 pL.

### [Evaluation of gas permeation property]

### (Evaluation test 1)

With use of a gas separation device 100 illustrated in Fig. 3 which included a gas separation membrane cell 61, separation performance of the gas separation membrane obtained in each of Examples and Comparative Examples was evaluated. Specifically, the prepared gas separation membrane was cut into an appropriate size to obtain a gas separation membrane 10 in a flat membrane shape. The gas separation membrane 10 was fixed between a feed side chamber 62 and a permeation side chamber 63 of the gas separation membrane cell 61 made of stainless steel. The temperature of the gas separation membrane cell was kept at 40°C. A raw material gas (CO₂: 8.4% by volume, N₂: 90.9% by volume, H₂O: 1.7% by volume) was fed to the feed side chamber 62 of the gas separation membrane cell 61 at a flow rate of 31.7 NL/h. Here, the flow rates of CO₂ and N₂ were controlled by a mass flow controller (MFC). Moreover, water was introduced with a metering liquid feed pump 81, evaporated by heating, and adjusted so that H₂O had the above mixed ratio. The pressure of the feed side chamber 62 was adjusted to 120 kPaA (absolute pressure) by a back pressure regulator 65 which was provided on the downstream side of a cold trap 64 midway through a discharging path for a non-permeation gas. A back pressure regulator 69 and a decompression pump 71 were provided between a cold trap 66 and a gas chromatograph 67 disposed downstream of the permeation side chamber 63, and thus the pressure of the permeation side chamber 63 was adjusted to 10 kPaA.

After starting operation of the gas separation device 100, when reaching steady state, a permeation gas was analyzed with the gas chromatograph 67 to determine N₂ permeance [mol/(m²·sec·kPa)]. The permeation gas to be analyzed here was a permeation gas obtained after removing, with the cold trap 66, water vapor contained in the permeation gas discharged from the permeation side chamber 63.

The durability of the membrane was evaluated as the time taken for the N₂ permeance to increase by 50% with respect to the initial value.

### [Example 1]

### (Preparation of coating solution (A0))

4.0 g of polyethylene oxide (ALKOX E-160, manufactured by Meisei Chemical Works, Ltd.), 196.0 g of water, and 1.1 g of an aqueous solution containing 10% by weight of a surfactant (SURFLON S-242, manufactured by AGC Seimi Chemical Co., Ltd.) were mixed and stirred, and then filtered with a filter having a pore diameter of 2 pm to obtain a coating solution (A0).

### (Preparation of coating solution (A1))

A coating solution (A1) was obtained by mixing and stirring (i) 0.1 g of an ethanol solution containing 0.1% by weight of DL-α-tocopherol (manufactured by Tokyo Chemical Industry Co., Ltd.) and (ii) 5.0 g of the coating solution (A0).

### (Preparation and evaluation of OIT test sample)

The coating solution (A1) was applied by 1.0 g to a glass plate and dried in a vacuum oven for 12 hours to obtain a sample. With use of the sample detached from the glass plate, an OIT test evaluation was carried out.

### (Preparation of gas separation membrane)

As a first porous layer, a polypropylene (PP) porous membrane (Celgard (registered trademark) 2500, manufactured by Polypore) was prepared. With use of corona surface modification test equipment (TEC-4AX, manufactured by KASUGA DENKI, INC., treatment electrode width: 21 cm), one surface of the first porous layer was subjected to a corona treatment under conditions in which discharge power was 75 W and a treatment speed was 1 m/min.

The corona treatment surface of the first porous layer was coated with the coating solution (A0) using a film applicator in which a coating thickness was set to 100 pm, and thus a coating film was formed.

With use of an electron beam irradiator (EC250, manufactured by IWASAKI ELECTRIC CO., LTD.), the coating film was subjected to an electron beam irradiation treatment under conditions in which an exposure dose was 50 kGy, an electric current was 5.6 mA, a voltage was 225 kV, a speed was 8 m/min, and the number of times was once. After that, the coating film was dried at 25°C for 12 hours.

### (Application of antioxidant)

To the coating film (78 cm²) which had been dried, 5 mL of an ethanol solution containing 0.025% by weight of DL-α-tocopherol (manufactured by Tokyo Chemical Industry Co., Ltd.) was sprayed using an airbrush. After that, drying at 25°C was carried out for 12 hours, and thus a gas separation membrane was obtained.

### (Evaluation of permeation property)

With use of the above obtained gas separation membrane, gas permeation property was evaluated.

### [Example 2]

### (Preparation of coating solution (A2))

A coating solution (A2) was obtained by mixing and stirring (i) 0.1 g of an ethanol solution containing 0.1% by weight of DL-α-tocopherol (manufactured by Tokyo Chemical Industry Co., Ltd.) and 0.1% by weight of Irganox 1520 (manufactured by BASF Japan Ltd.) and (ii) 5.0 g of the coating solution (A0).

### (Preparation and evaluation of OIT test sample)

Preparation of a sample and an OIT test evaluation were carried out with methods similar to those of Example 1, except that the coating solution (A2) was used in place of the coating solution (A1).

### (Preparation of gas separation membrane)

A coating film was formed on a corona treatment surface of a first porous layer with the same method as Example 1, and then the coating film was subject to an electron beam irradiation treatment, and then the coating film was dried.

### (Application of antioxidant)

To the coating film (78 cm²) which had been dried, 5 mL of an ethanol solution containing 0.025% by weight of DL-α-tocopherol (manufactured by Tokyo Chemical Industry Co., Ltd.) and 0.025% by weight of Irganox 1520 (manufactured by BASF Japan Ltd.) was sprayed using an airbrush. After that, drying at 25°C was carried out for 12 hours, and thus a gas separation membrane was obtained.

### (Contained amount of antioxidant)

The gas separation membrane was subjected to LC measurement. From the LC measurement, as the amount of the antioxidant in the separate functional layer, an amount of DL-α-tocopherol was 261 ppm by weight, and an amount of Irganox 1520 was not more than 100 ppm by weight, which was the lower limit of quantification.

### (Evaluation of permeation property)

With use of the above obtained gas separation membrane, permeation property was evaluated.

### [Example 2']

### (Preparation of gas separation membrane)

A coating film was formed on a corona treatment surface of a first porous layer with the same method as Example 1, and then the coating film was subject to an electron beam irradiation treatment, and then the coating film was dried.

### (Application of antioxidant)

To the coating film (78 cm²) which had been dried, 5 mL of an ethanol solution containing 2.5% by weight of DL-α-tocopherol (manufactured by Tokyo Chemical Industry Co., Ltd.) and 2.5% by weight of Irganox 1520 (manufactured by BASF Japan Ltd.) was sprayed using an airbrush. After that, drying at 25°C was carried out for 12 hours, and thus a gas separation membrane was obtained.

### (Contained amount of antioxidant)

The gas separation membrane was subjected to LC measurement. From the LC measurement, as the amount of the antioxidant in the separate functional layer, an amount of DL-α-tocopherol was 8,658 ppm by weight, and an amount of Irganox 1520 was 37,173 ppm by weight.

### (Evaluation of permeation property)

With use of the above obtained gas separation membrane, permeation property was evaluated.

### [Example 3]

### (Preparation of coating solution (A3'))

4.0 g of polyether block amide (Pebax MH1657, manufactured by Arkema Inc.), 137.2 g of ethanol, 58.8 g of water, and 1.1 g of an ethanol solution containing 10% by weight of a surfactant (SURFLON S-242, manufactured by AGC Seimi Chemical Co., Ltd.) were mixed and stirred, and then filtered with a filter having a pore diameter of 2 pm to obtain a coating solution (A3'). The contained amount of the ethyleneoxy unit in the polyether block amide was 60% in terms of weight ratio.

### (Preparation of coating solution (A3))

A coating solution (A3) was obtained by mixing and stirring (i) 0.1 g of an ethanol solution containing 0.1% by weight of DL-α-tocopherol (manufactured by Tokyo Chemical Industry Co., Ltd.) and 0.1% by weight of Irganox 1520 (manufactured by BASF Japan Ltd.) and (ii) 5.0 g of a coating solution (A3').

### (Preparation of OIT test sample)

Preparation of a sample and an OIT test evaluation were carried out with methods similar to those of Example 1, except that the coating solution (A3) was used in place of the coating solution (A1).

### (Preparation of gas separation membrane)

As a first porous layer, a polypropylene (PP) porous membrane (Celgard (registered trademark) 2500, manufactured by Polypore) was prepared. With use of corona surface modification test equipment (TEC-4AX, manufactured by KASUGA DENKI, INC., treatment electrode width: 21 cm), one surface of the first porous layer was subjected to a corona treatment under conditions in which discharge power was 75 W and a treatment speed was 1 m/min.

The corona treatment surface of the first porous layer was coated with the coating solution (A3) using a film applicator in which a coating thickness was set to 100 pm, and thus a coating film was formed. After that, drying at 25°C was carried out for 12 hours, and thus a gas separation membrane was obtained.

### (Evaluation of permeation property)

With use of the above obtained gas separation membrane, permeation property was evaluated.

### [Example 4]

### (Preparation of coating solution (A4'))

8.0 g of an ethylene oxide-propylene oxide copolymer (ALKOX EP1550H, manufactured by Meisei Chemical Works, Ltd.), 192 g of water, and 1.1 g of an aqueous solution containing 10% by weight of a surfactant (SURFLON S-242, manufactured by AGC Seimi Chemical Co., Ltd.) were mixed and stirred, and then filtered with a filter having a pore diameter of 2 pm to obtain a coating solution (A4'). The contained amount of the ethyleneoxy unit in the ethylene oxide-propylene oxide copolymer was 90% in terms of weight ratio.

### (Preparation of coating solution (A4))

A coating solution (A4) was obtained by mixing and stirring (i) 0.2 g of an ethanol solution containing 0.1% by weight of DL-α-tocopherol (manufactured by Tokyo Chemical Industry Co., Ltd.) and 0.1% by weight of Irganox 1520 (manufactured by BASF Japan Ltd.) and (ii) 5.0 g of a coating solution (A4').

### (Preparation of OIT test sample)

Preparation of a sample and an OIT test evaluation were carried out with methods similar to those of Example 1, except that the coating solution (A4) was used in place of the coating solution (A1).

### (Preparation of gas separation membrane)

A gas separation membrane was obtained with a method similar to that of Example 3, except that the coating solution (A4) was used in place of the coating solution (A3).

### (Evaluation of permeation property)

With use of the above obtained gas separation membrane, permeation property was evaluated.

### [Comparative Example 1]

### (Preparation of coating solution (A0))

A coating solution (A0) was obtained with the same method as Example 1.

### (Preparation of OIT test sample)

Preparation of a sample and an OIT test evaluation were carried out with methods similar to those of Example 1, except that the coating solution (A0) was used in place of the coating solution (A1).

### (Preparation of gas separation membrane)

As a first porous layer, a polypropylene (PP) porous membrane (Celgard (registered trademark) 2500, manufactured by Polypore) was prepared. With use of corona surface modification test equipment (TEC-4AX, manufactured by KASUGA DENKI, INC., treatment electrode width: 21 cm), one surface of the first porous layer was subjected to a corona treatment under conditions in which discharge power was 75 W and a treatment speed was 1 m/min.

The corona treatment surface of the first porous layer was coated with the coating solution (A0) using a film applicator in which a coating thickness was set to 100 pm, and thus a coating film was formed.

With use of an electron beam irradiator (EC250 manufactured by IWASAKI ELECTRIC CO., LTD.), the coating film was subjected to an electron beam irradiation treatment under conditions in which an exposure dose was 50 kGy, an electric current was 5.6 mA, a voltage was 225 kV, a speed was 8 m/min, and the number of times was once. After that, drying at 25°C was carried out for 12 hours, and thus a gas separation membrane was obtained.

### (Evaluation of permeation property)

With use of the above obtained gas separation membrane, permeation property was evaluated.

### [Comparative Example 2]

### (Preparation of coating solution (B2))

A coating solution (B2) was obtained by mixing and stirring (i) 0.1 g of an ethanol solution containing 0.1% by weight of 2,6-di-tert-butyl-p-cresol (manufactured by Tokyo Chemical Industry Co., Ltd.) and (ii) 5.0 g of the coating solution (A0).

### (Preparation of OIT test sample)

Preparation of a sample and an OIT test evaluation were carried out with methods similar to those of Example 1, except that the coating solution (B2) was used in place of the coating solution (A1).

### [Comparative Example 3]

### (Preparation of coating solution (B3))

A coating solution (B3) was obtained by mixing and stirring (i) 0.1 g of an ethanol solution containing 0.1% by weight of D-sorbitol (manufactured by Tokyo Chemical Industry Co., Ltd.) and (ii) 5.0 g of the coating solution (A0).

### (Preparation of OIT test sample)

Preparation of a sample and an OIT test evaluation were carried out with methods similar to those of Example 1, except that the coating solution (B3) was used in place of the coating solution (A1).

### [Comparative Example 4]

### (Preparation of coating solution (B4))

A coating solution (B4) was obtained by mixing and stirring (i) 0.1 g of an ethanol solution containing 0.1% by weight of N,N-diethylhydroxylamine (manufactured by Tokyo Chemical Industry Co., Ltd.) and (ii) 5.0 g of the coating solution (A0).

### (Preparation of OIT test sample)

Preparation of a sample and an OIT test evaluation were carried out with methods similar to those of Example 1, except that the coating solution (B4) was used in place of the coating solution (A1).

### [Comparative Example 5]

### (Preparation of coating solution (B5))

A coating solution (B5) was obtained by mixing and stirring (i) 0.1 g of an ethanol solution containing 0.1% by weight of L-ascorbic acid (manufactured by Tokyo Chemical Industry Co., Ltd.) and (ii) 5.0 g of the coating solution (A0).

### (Preparation of OIT test sample)

Preparation of a sample and an OIT test evaluation were carried out with methods similar to those of Example 1, except that the coating solution (B5) was used in place of the coating solution (A1).

### [Evaluation results]

Table 1 shows evaluation results of Examples and Comparative Examples.

**[Table 1]**

| | Polymer | Antioxidant | OIT test | Gas permeation test |
|---|---|---|---|---|
| Example 1 | PEO | DL-α-tocopherol | 30 minutes or more | 1500 hours or more |
| Example 2 | PEO | DL-α-tocopherol + Irganox 1520 | 30 minutes or more | 5000 hours or more |
| Example 2' | PEO | DL-α-tocopherol + Irganox 1520 | - | 5000 hours or more |
| Example 3 | Polyether block amide | DL-α-tocopherol + Irganox 1520 | 30 minutes or more | 100 hours or more |
| Example 4 | Ethylene oxide-propylene oxide copolymer | DL-α-tocopherol + Irganox 1520 | 30 minutes or more | 100 hours or more |
| Comparative Example 1 | PEO | None | 5 minutes or less | Less than 100 hours |
| Comparative Example 2 | PEO | 2,6-di-tert-butyl-p-cresol | 5 minutes or less | - |
| Comparative Example 3 | PEO | D-sorbitol | 5 minutes or less | - |
| Comparative Example 4 | PEO | N,N-diethylhydroxylamine | 5 minutes or less | - |
| Comparative Example 5 | PEO | L-ascorbic acid | 5 minutes or less | - |

Table 2 shows an inorganic value, an organic value, and an I/O value of each of the antioxidants. These values were calculated based on "Organic Conceptual Diagram - Fundamentals and Applications - New edition", (Yoshio Koda, et al., SANKYO SHUPPAN CO., LTD., 2008).

**[Table 2]**

| Antioxidant | Inorganic value | Organic value | I/O value |
|---|---|---|---|
| DL-α-tocopherol | 145 | 550 | 0.26 |
| Irganox 1520 | 155 | 580 | 0.27 |
| 2,6-di-tert-butyl-p-cresol | 115 | 260 | 0.44 |
| D-sorbitol | 600 | 120 | 5 |
| N,N-diethylhydroxylamine | 170 | 80 | 2.13 |
| L-ascorbic acid | 522 | 120 | 4.35 |

As shown in Tables 1 and 2, Examples 1 through 4 in each of which the antioxidant was used whose I/O value was 0.4 or less exhibited excellent results in the OIT test, as compared with Comparative Examples 1 through 5 in each of which the antioxidant was used whose I/O value was more than 0.4. Examples 1 through 4 also exhibited excellent results in the gas permeation test, as compared with Comparative Example 1. As such, it has been found that, by combining a polymer which has a polyethylene oxide structure with an antioxidant whose I/O value is 0.4 or less, it is possible to provide a gas separation membrane which is excellent in durability with respect to deterioration of a polymer due to an oxidizing gas. Comparative Examples 2 through 5 exhibited results similar to that of Comparative Example 1 in the OIT test, and it is therefore inferred that results in the gas permeation test would also be comparable to that of Comparative Example 1.

### Industrial Applicability

An aspect of the present invention can be utilized in a gas separation membrane that separates a specific gas component from a mixed gas.

### Reference Signs List

10: Gas separation membrane
11: Porous support layer
12: Protective layer
13: Reinforcing layer
15: Separate functional layer
61: Gas separation membrane cell
62: Feed side chamber
63: Permeation side chamber
64: Cold trap
65: Back pressure regulator
66: Cold trap
67: Gas chromatograph
81: Metering liquid feed pump
69: Back pressure regulator
71: Decompression pump
100: Gas separation device

## Claims

1. A gas separation membrane comprising:
a separate functional layer that contains an antioxidant and a polymer which has a polyethylene oxide structure,
the polymer which has the polyethylene oxide structure including an ethyleneoxy unit at a proportion of 57% or more in terms of weight ratio with respect to 100% of constitutional units of a main chain, and
the antioxidant having an I/O value of 0.4 or less in an organic conceptual diagram.

2. The gas separation membrane as set forth in claim 1, wherein:
the antioxidant has an organic value of 300 to 1,500 and an inorganic value of 0 to 300 in the organic conceptual diagram.

3. The gas separation membrane as set forth in claim 1 or 2, wherein:
the antioxidant is in the form of liquid under conditions of 1 atm and 25°C.

4. The gas separation membrane as set forth in any one of claims 1 through 3, wherein:
the separate functional layer contains a primary antioxidant and a secondary antioxidant as the antioxidant.

5. The gas separation membrane as set forth in any one of claims 1 through 4, further comprising:
a porous support layer,
the separate functional layer being provided on the porous support layer.

6. The gas separation membrane as set forth in any one of claims 1 through 5, wherein:
said gas separation membrane is used to selectively allow carbon dioxide to permeate therethrough from a mixed gas including the carbon dioxide and nitrogen.

7. A gas separation device, comprising a gas separation membrane recited in any one of claims 1 through 6.

8. A method for producing a gas separation membrane, said method comprising the step of:
forming a separate functional layer on a porous support layer, the separate functional layer containing an antioxidant and a polymer which has a polyethylene oxide structure,
the polymer which has the polyethylene oxide structure including an ethyleneoxy unit at a proportion of 57% or more in terms of weight ratio with respect to 100% of constitutional units of a main chain, and
the antioxidant having an I/O value of 0.4 or less in an organic conceptual diagram.

9. A gas separation membrane, comprising:
a separate functional layer that contains at least one selected from the group consisting of vitamin E and an analogue thereof; and
a porous support layer.

## Amended claims

### Amended claims in accordance with Rule 137(2) EPC.

1. A gas separation membrane comprising:
a separate functional layer that contains an antioxidant and a polymer which has a polyethylene oxide structure,
the polymer which has the polyethylene oxide structure including an ethyleneoxy unit at a proportion of 57% or more in terms of weight ratio with respect to 100% of constitutional units of a main chain,
the antioxidant having an I/O value of 0.4 or less in an organic conceptual diagram, wherein the I/O value in an organic conceptual diagram is defined in the description,
**characterized in that** the gas separation membrane further comprises
a porous support layer, the separate functional layer is provided on the porous support layer, and
an amount of the antioxidant contained in the separate functional layer is not less than 100 ppm by weight and not more than 30% by weight.

2. The gas separation membrane as set forth in claim 1, wherein:
the antioxidant has an organic value of 300 to 1,500 and an inorganic value of 0 to 300 in the organic conceptual diagram.

3. The gas separation membrane as set forth in claim 1 or 2, wherein:
the antioxidant is in the form of liquid under conditions of 1013.25 hPa (1 atm) and 25°C.

4. The gas separation membrane as set forth in any one of claims 1 through 3, wherein:
the separate functional layer contains a radical scavenger and a peroxide decomposition agent as the antioxidant.

5. The gas separation membrane as set forth in any one of claims 1 through 4, wherein:
said gas separation membrane is configured to selectively allow carbon dioxide to permeate therethrough from a mixed gas including the carbon dioxide and nitrogen.

6. A gas separation device, comprising a gas separation membrane recited in any one of claims 1 through 5.

7. A method for producing a gas separation membrane, said method comprising the step of:
forming a separate functional layer on a porous support layer, the separate functional layer containing an antioxidant and a polymer which has a polyethylene oxide structure,
the polymer which has the polyethylene oxide structure including an ethyleneoxy unit at a proportion of 57% or more in terms of weight ratio with respect to 100% of constitutional units of a main chain, and
the antioxidant having an I/O value of 0.4 or less in an organic conceptual diagram.
